# FASCICULE DE BREVET EUROPEEN

(11) **EP 1 101 631 B1**
(45) Date de publication et mention de la délivrance du brevet: **21.01.2004**
(21) Numéro de dépôt: 00123833.6
(22) Date de dépôt: 02.11.2000
(51) Int. Cl.: B60B 21/06, B60B 1/04

(54) **Organe d'accrochage de l'extrémité d'un rayon à une jante ou un moyeu**
Befestigungsvorrichtung für das Ende einer Speiche an einer Felge oder Nabe
Fastening device for the end of a spoke to a rim or hub

(30) Priorité: 18.11.1999 FR 9914683
(43) Date de publication de la demande: 23.05.2001
(73) Titulaire: MAVIC S.A., 74370 Metz-Tessy (FR)
(72) Inventeur: Mercat, Jean-Pierre, 01400 Chatillon sur Chalaronne (FR); Feche, Pierre, 74960 Cran Gevrier (FR)
(74) Mandataire: Lejeune, Benoit

(56) Documents cités:
- EP-A- 0 818 328
- EP-A- 0 838 352
- EP-A- 0 896 886
- WO-A-93/09963
- FR-A- 2 513 185

## Description

L'invention concerne un organe d'accrochage de l'extrémité d'un rayon à une jante ou un moyeu.

Pour une roue à rayon, notamment une roue de bicyclette, il est connu d'accrocher l'extrémité d'un rayon à la jante au moyen d'un écrou de rayon.

Cet écrou présente une tête élargie qui est retenue dans un perçage de la jante, prolongée par un tube taraudé intérieurement. Cet écrou est vissé sur l'extrémité filetée du rayon, ce qui permet de réaliser à la fois l'accrochage du rayon, et le réglage de sa tension.

On connaît également d'après la demande de brevet européen publiée sous le numéro EP 896 886 un organe d'accrochage prévu pour retenir la tête d'un rayon. Cet organe se présente comme une vis creuse, qui est traversée par le corps du rayon. La vis retient la tête du rayon, et elle est prévue pour être vissée dans un perçage taraudé de la jante. Dans ce cas, l'organe d'accrochage est fileté sur l'extérieur.

Le problème qui se pose pour ces organes d'accrochage est d'éviter leur desserrage qui provoque immanquablement une détente du rayon. Le problème vient du fait que l'écrou ou la vis sont vissés jusqu'à ce que le rayon atteigne la tension souhaitée. Le couple de vissage augmente progressivement avec la tension du rayon, mais à aucun moment une butée ou autre provoque une augmentation exponentielle du couple de serrage, comme cela se produit avec un montage vis-écrou traditionnel.

De façon générale, on sait ajouter un composant externe tel que de la colle dans l'un au moins des filetages, avant assemblage. Cette colle peut être contenue dans des micro billes qui éclatent au moment du serrage.

On connaît également une solution mécanique qui consiste à donner une section particulière au filet de l'un des filetages.

Toutefois ces solutions ne sont pas totalement satisfaisantes. Ou bien elles sont coûteuses, ou bien elles sont compliquées à mettre en oeuvre, ou bien leur efficacité se détériore au cours du temps avec des serrages et desserrages successifs qui sont réalisés lors d'un réglage de la roue, par exemple pour une reprise de voile.

Pour les écrous de rayons décrits plus haut, on connaît d'après la demande de brevet européen publiée sous le numéro EP 838 352 une solution qui consiste à placer au niveau de la tête de l'écrou un insert déformable dans lequel l'extrémité du rayon creuse son filet.

Une telle solution profite du fait que l'écrou présente une tête élargie qui le retient à la jante. L'insert est logé dans le volume de la tête. Mais cette solution n'est pas applicable dans le cas d'une vis creuse, étant donné que la vis creuse est retenue par son filetage, et non par une tête élargie.

L'invention propose d'améliorer les organes d'accrochage de rayons à une jante ou à un moyeu de type à filetage externe en leur conférant une meilleure tenue au serrage sous tension.

A cet effet, l'organe de retenue selon l'invention présente un corps tubulaire creux avec une paroi externe filetée sur au moins une partie de sa hauteur. Il est caractérisé par le fait que la partie filetée présente au moins localement une portion élastiquement déformable en saillie par rapport au reste du filet de la partie filetée selon une direction radiale et/ou axiale.

On a en effet trouvé qu'une telle portion en saillie augmentait de façon significative le frottement entre les deux filets de l'ensemble, et de ce fait que la tenue au serrage de la vis était meilleure.

Le fait que la ou les portions soient élastiquement déformables améliore la tenue du serrage dans le temps, avec les serrages et desserrages successifs de l'organe.

En outre, tel que cela apparaîtra dans la suite, les différents modes de mise en oeuvre de l'invention sont relativement simples à réaliser, et peu coûteux. Ils sont de plus parfaitement compatibles avec l'absence de tête élargie, qui est caractéristique de ce mode d'accrochage.

L'invention sera mieux comprise en se référant à la description ci-dessous et aux dessins en annexe qui en font partie intégrante.

Les figures 1 et 2 représentent l'extrémité d'un rayon et son organe d'accrochage selon un état de l'art antérieur à la présente invention.

La figure 3 représente un organe d'accrochage selon un premier mode de mise en oeuvre de l'invention.

La figure 4 est une vue de l'organe de la figure 3 selon un plan de coupe BB.

La figure 5 est une vue en coupe de l'organe de la figure 4 selon un plan de coupe CC.

La figure 6 montre un second mode de mise en oeuvre de l'invention.

La figure 7 est une vue de face d'un organe de retenue selon un autre mode de mise en oeuvre de l'invention.

La figure 8 est une vue en coupe transversale de l'organe de la figure 7.

La figure 9 est une vue de face d'un organe d'accrochage selon un autre mode de mise en oeuvre de l'invention.

La figure 10 est une vue de côté de l'organe de la figure 9.

La figure 11 représente en perspective l'insert qui est introduit à l'intérieur de la vis creuse.

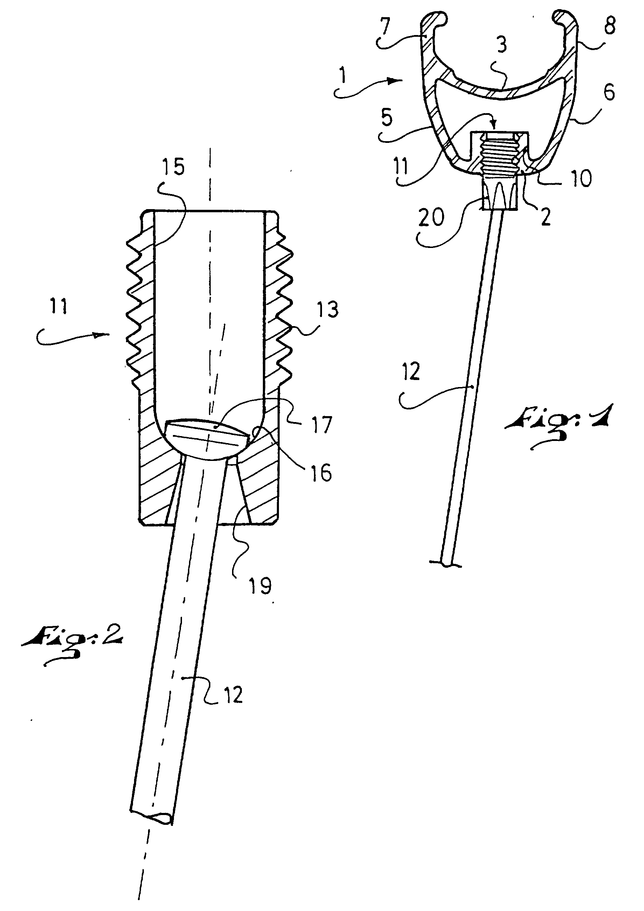

Les figures 1 et 2 illustrent l'état de l'art. La figure 1 représente en coupe transversale un profil de jante 1 ayant une structure en caisson, avec un pont inférieur 2, un pont supérieur 3, deux parois latérales 5 et 6 qui se prolongent au-delà du pont supérieur pour former les ailes 7 et 8 de retenue du pneumatique.

Le pont inférieur 2 présente des perçages 10 formés selon une cheminée orientée vers l'intérieur du caisson. La cheminée est taraudée intérieurement.

Une telle jante a déjà été décrite par exemple dans la demande de brevet EP 818 328, mode de réalisation de la figure 13.

Le perçage 10 est prévu pour recevoir un organe d'accrochage 11 d'un rayon 12.

L'organe d'accrochage 11 se présente comme une vis creuse filetée sur une partie 13 de sa paroi externe. A l'intérieur, la vis présente un évidement cylindrique 15 qui se resserre à l'extrémité de la vis pour former un siège de retenue 16 de la tête 17 du rayon 12. De préférence, le siège de retenue 16 est arrondi selon une portion de sphère, le dessous de la tête de rayon a une forme complémentaire, et l'évidement 15 présente sous le siège 16 une forme évasée. Ainsi, tel que cela est visible dans la figure 2, l'axe du rayon 12 est susceptible de se décaler de quelques degrés par rapport à l'axe de l'organe 11.

Sous la partie filetée 13, l'organe présente une empreinte 20 qui est prévue pour l'accrochage d'un outil de serrage.

On a réalisé de tels organes en un alliage connu sous le nom de "Zamac" qui présente un diamètre hors tout de 7 millimètres, et une hauteur de 13,5 millimètres environ, la partie filetée étant filetée au pas M7, et s'étendant sur 6,5 millimètres environ. Naturellement, ces chiffres ne sont donnés qu'à titre indicatif. On pourrait également réaliser l'organe en alliage d'aluminium, en acier ou en laiton ou tout autre matériau approprié.

La construction de l'organe 11 n'est pas limitative et il existe d'autres modes de réalisation qui pourraient illustrer l'état de l'art. Ce qui est important en fait c'est que l'organe présente une forme tubulaire dont la paroi externe est filetée sur au moins une partie de la hauteur de l'organe.

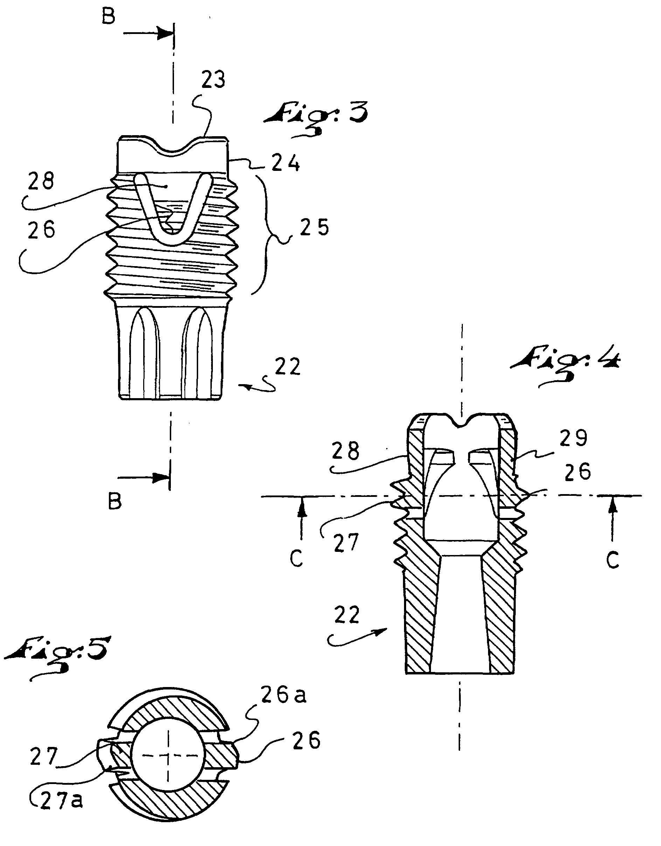

Les figures 3 à 5 sont relatives à un premier mode de mise en oeuvre de l'invention.

L'organe de retenue 22 qui est représenté a une structure semblable à celle à celui qui a été précédemment décrit, avec un corps 24 tubulaire dont la paroi externe est filetée sur une partie 25 de sa hauteur.

Selon le mode de réalisation illustré, deux portions de filets 26 et 27 diamétralement opposées de la partie filetée 25 sont en saillie selon une direction radiale par rapport au reste du filetage.

Les deux portions 26 et 27 sont portées par des languettes découpées dans la paroi du corps 23 et raccordées au reste du corps au niveau de leur base qui est située vers l'extrémité du corps qui est engagée en premier dans le perçage taraudé. Les languettes 28 et 29 sont légèrement fléchies vers l'extérieur de la paroi pour mettre les portions 26 et 27 en saillie par rapport au reste du filetage.

Les languettes 28 et 29 sont prévues pour fléchir élastiquement vers l'intérieur du corps 23 de façon à ramener de façon élastique les portions 26 et 27 dans la continuité du reste du filetage lorsque l'organe est vissé dans un perçage tel que le perçage 10 de la figure 1.

Dans le mode de réalisation illustré, les portions 26 et 27 couvrent deux filets successifs, et s'étendent chacune approximativement sur une plage de 10 à 30 degrés autour du filet. Dans la figure, il est visible que les languettes présentent globalement une forme triangulaire.

L'organe 22 est réalisé en tout matériau approprié, notamment il est réalisé par moulage d'un alliage connu sous le nom de "Zamac", ou bien en alliage d'aluminium, en acier ou en laiton.

Lorsque l'organe 22 est vissé dans un perçage taraudé tel que le perçage 10 de la figure 1, les portions en saillie induisent une augmentation du frottement avec le contre-filet du perçage d'où une meilleure tenue au serrage de la vis creuse.

De préférence, tel que cela est visible dans la figure 5, les portions 26 et 27 présentent une dépouille 26a, 27a dans les zones qui s'engagent en premier dans le contre-filet du perçage lors d'un vissage. Ces dépouillent facilitent l'engagement des filets des portions déformables dans le taraudage du logement.

En variante de ce mode de réalisation, on pourrait prévoir que dans les portions 26 et 27, les filets soient décalés en inclinaison, ou selon une direction longitudinale par rapport au reste du filetage, de façon que les languettes travaillent non seulement en flexion, mais aussi en torsion ou en extension ou en compression.

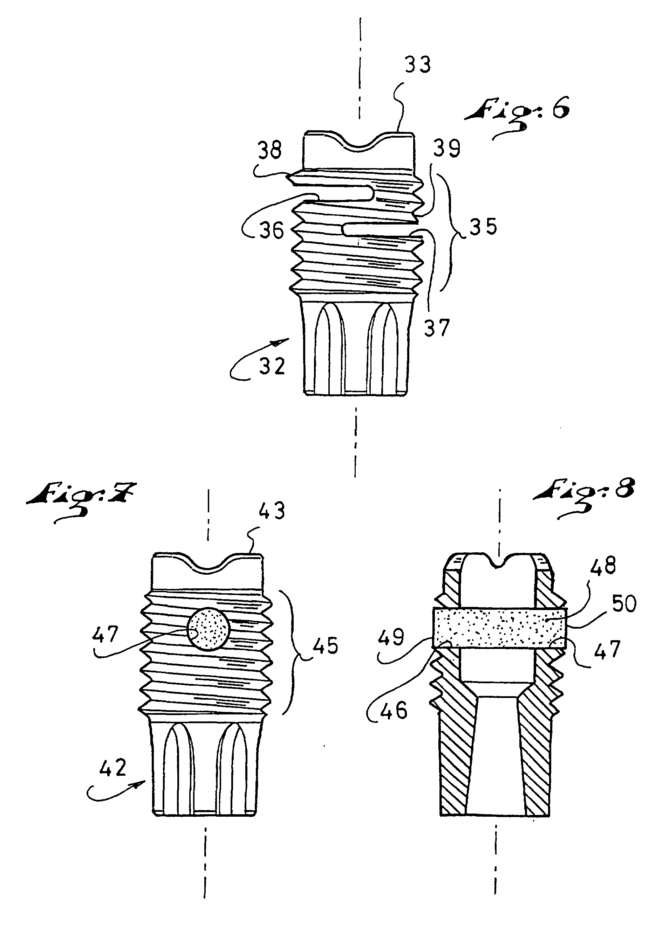

La figure 6 est relative à un autre mode de mise en oeuvre de l'invention. L'organe d'accrochage 32 présente comme dans le cas précédent un corps tubulaire 33 dont la paroi externe est filetée sur une partie 35 de la hauteur.

Selon ce mode de mise en oeuvre, au moins une fente est réalisée dans la partie filetée du corps, selon un axe perpendiculaire à l'axe longitudinal défini par le corps 33. En outre, la zone de la partie filetée 35 située au-dessus de la fente a été déformée selon une direction longitudinale pour que les filets au-dessus de la fente soient légèrement décalés par rapport au pas défini par le filet en dessous de la fente. Dans le mode de réalisation illustré, le corps présente deux fentes 36 et 37 diamétralement opposées. Les fentes sont orientées selon un plan radial, et elles découpent le corps sur un peu plus que la moitié de la périphérie du corps. Elles sont décalées selon une direction longitudinale, et elles sont espacées dans le sens longitudinal de la valeur approximative d'un pas et demi. Les portions 38 et 39 de filet situées au-dessus des fentes, c'est-à-dire vers l'extrémité du corps prévue pour être engagée en premier dans le perçage taraudé, sont décalées légèrement par rapport au pas du filet en dessous des fentes.

Les fentes et le décalage peuvent être réalisés lors de l'opération de moulage. Dans ce cas, par exemple, le matériau utilisé est un alliage connu sous le nom de "Zamac" ou tout autre matériau approprié. Selon une autre possibilité, les fentes sont réalisées par usinage, et le décalage est obtenu en soumettant l'organe à un frappe selon une direction longitudinale. D'autres techniques pourraient aussi être utilisées.

Lors du serrage de l'embout, les portions décalées du filet sont forcées de reprendre le pas du contre-filet du perçage taraudé, en jouant sur l'élasticité du corps que les fentes ont crées. De ce fait, le frottement augmente entre les portions décalées et le contre-filet, ce qui améliore la tenue du serrage.

Selon la figure 7, le corps 43 de l'organe 42 est percé dans sa partie filetée 45 de part en part d'un orifice débouchant 46, 47 traversant la paroi du corps selon un diamètre. Un insert 48 cylindrique et élastiquement déformable est introduit à l'intérieur de l'orifice. La longueur de l'insert est suffisante pour que ses faces d'extrémité 49 et 50 soient localement en saillie au moins par rapport aux fonds de filet de la partie 45.

L'insert est par exemple réalisé en élastomère, ou alors en polyamide ou en résine acétale.

Au serrage de l'organe dans le perçage taraudé, les faces d'extrémité 49 et 50 de l'insert se déforment de façon à épouser le relief du contre-filet. Elles provoquent une compression locale de l'insert selon la direction longitudinale qu'il définit. En se déformant, les faces d'extrémité 49 et 50 qui sont en saillie par rapport au reste de la partie filetée 45 de l'insert reforment des portions de filet déformables.

Le frottement sous pression des faces 49 et 50 contre le contre-filet augmente la tenue au serrage de l'organe d'accrochage. Eventuellement, les extrémités de l'insert peuvent être chanfreinées ou arrondies pour faciliter l'introduction de l'insert dans le perçage taraudé.

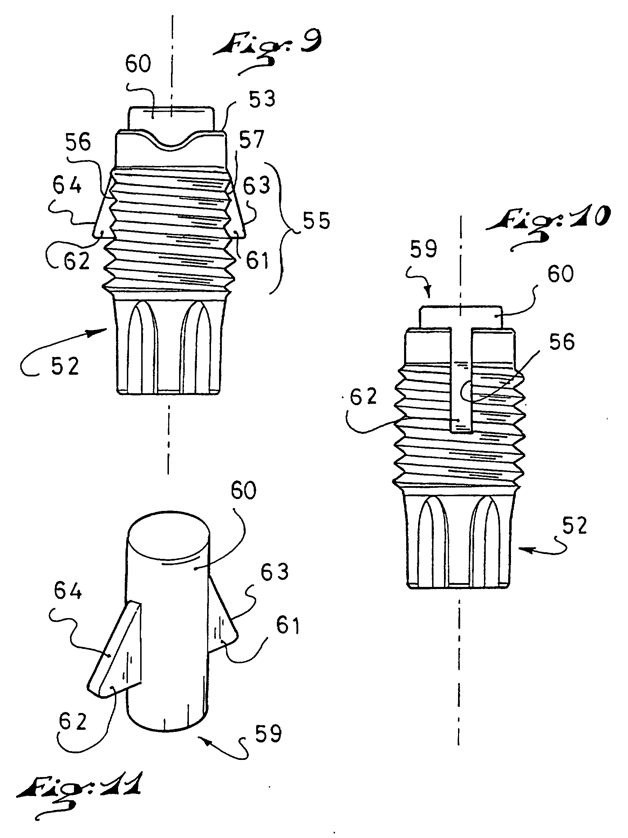

Selon la figure 9, l'organe 52 présente un corps 53 dont une partie 55 de la paroi externe est filetée. Deux saignées 56 et 57 diamétralement opposées sont réalisées dans la paroi du corps, selon une direction longitudinale. Les saignées débouchent à l'extrémité de l'organe qui est prévue pour être engagée en premier dans le perçage taraudé, et elles coupent au moins quelques filets de la partie filetée 55.

Un insert 59 est engagé à l'intérieur du corps 53 et des saignées 56 et 57. L'insert est représenté en perspective dans la figure 11. Il présente lui-même un fût 60 cylindrique de révolution. Le diamètre du fût correspond au diamètre interne du corps de l'organe pour pouvoir être introduit à l'intérieur du corps. L'insert présente par ailleurs deux ailes latérales 61 et 62 diamétralement opposées dont l'envergure est suffisante pour traverser les saignées 56 et 57, et faire saillie ainsi que le représente la figure 9.

En variante, le fût peut être creux de façon à lui donner une certaine souplesse.

L'insert est réalisé en une matière élastiquement déformable, par exemple en élastomère, ou bien en polyamide ou en résine acétale. De préférence, les ailes ont une forme triangulaire effilée vers l'extrémité de l'organe qui sera introduite la première dans le perçage taraudé, pour faciliter la pénétration des ailes dans le perçage.

En pénétrant dans le perçage, les ailes 61 et 62 de l'insert se déforment élastiquement de façon à épouser le relief du contre-filet, ce qui augmente le frottement, et donc la tenue en serrage de l'organe. En se déformant, les extrémités 63 et 64 des ailes qui sont en saillie par rapport au reste de la partie filetée reforment des portions de filet déformables.

Eventuellement, tel que cela est visible dans la figure 11, le fût de l'insert peut être prolongé en direction du siège de retenue de la tête de rayon. Ce siège a été décrit précédemment en référence à la figure 2. Le fût peut être suffisamment long pour que sa base exerce une pression sur la tête de rayon, assurant ainsi une retenue élastique du rayon dans le cas où il se détend. De même, le fût peut être prolongé vers le pont supérieur de la jante de façon à prendre appui sur ce pont dans des conditions de serrage normales de l'organe. Ce contact augmente le frottement de l'organe de retenue et améliore sa tenue en serrage.

Les organes décrits avec leurs portions élastiquement déformables améliorent la tenue au serrage des organes de retenue. En outre, cette tenue au serrage ne se dégrade pas au cours des serrages et desserrages successifs des organes, par exemple lorsqu'il s'agit de rattraper un voile de la roue, ou de modifier la tension des rayons.

Un insert tel qu'il a été décrit en référence aux figures 8 ou 10 est par ailleurs avantageux car il obstrue au moins partiellement l'évidement de l'organe d'accrochage, et retient la tête de rayon dans le cas où le rayon se briserait.

Naturellement, la présente description n'est donnée qu'à titre indicatif, et l'on pourrait adopter d'autres mises en oeuvre de l'invention sans pour autant sortir du cadre de celle-ci.

Notamment, il va de soi que l'organe d'accrochage pourrait être utilisé pour accrocher un rayon non pas à la jante, mais au moyeu de la roue. La liaison entre le rayon et son organe d'accrochage pourrait être différent de ce qui a été décrit. Par exemple ce pourrait être par l'intermédiaire d'un taraudage interne de l'embout.

En outre, les portions déformables ont été décrites par paire, cependant on pourrait n'avoir qu'une seule languette dans le cas de la figure 1, une seule fente dans le cas de la figure 6, un seul orifice 46 ou 47 dans le cas de la figure 7, une seule saignée et une seule aile dans le cas de la figure 9.

## Revendications

1. Organe de retenue prévu pour l'accrochage d'un rayon à une jante ou un moyeu de bicyclette présentant un corps tubulaire creux (23, 33, 43, 53) avec une paroi externe filetée sur au moins une partie (25, 35, 45, 55) de sa hauteur, **caractérisé par le fait que** la partie filetée présente au moins localement une portion (26, 27, 38, 39, 49, 50, 63, 64) élastiquement déformable en saillie par rapport au reste du filet de la partie filetée selon une direction radiale et/ou axiale.

2. Organe selon la revendication 1, **caractérisé par le fait que** les portions en saillie sont des portions (26, 27) de filet portées par au moins une languette (28, 29) élastiquement déformable.

3. Organe selon la revendication 2, **caractérisé par le fait que** la ou les languettes (28, 29) sont découpées dans la paroi du corps (23) de l'organe.

4. Organe selon la revendication 1, **caractérisé par le fait que** le corps (33) de l'embout présente dans sa partie filetée (35) au moins une fente (36, 37) située dans un plan perpendiculaire à l'axe défini par l'organe et que les portions de filet (38, 39) situées d'un côté de la ou des fentes (36, 37) sont décalées longitudinalement par rapport au pas du reste du filet de l'autre côté de la ou des fentes.

5. Organe selon la revendication 4, **caractérisé par le fait qu'**il présente deux fentes (36, 37) décalées longitudinalement et diamétralement opposées.

6. Organe selon la revendication 1, **caractérisé par le fait que** le corps (43) de l'organe de retenue présente dans sa partie filetée (45) un orifice transversal le traversant de part en part, qu'un insert en matériau élastiquement déformable est logé à l'intérieur de l'orifice, les deux faces d'extrémité (49, 50) de l'insert étant en saillie par rapport au reste de la partie filetée.

7. Organe selon la revendication 6, **caractérisé par le fait que** l'insert est réalisé en élastomère, en polyamide ou en résine acétale.

8. Organe selon la revendication 1, **caractérisé par le fait que** le corps (53) présente dans sa paroi, au niveau de sa partie filetée (55), au moins une saignée (56, 57), qu'un insert (59) en matériau élastiquement déformable est engagé à l'intérieur du corps (53) de l'organe, et que l'insert présente au moins une aile (63, 64) engagée dans la saignée (56, 57) et faisant saillie par rapport au reste de la partie filetée.

9. Organe selon la revendication 8, **caractérisé par le fait que** le corps (53) de l'organe présente deux saignées diamétralement opposées, et que l'insert a un corps d'insert (60) et deux ailes (61, 62) diamétralement opposées.

10. Organe selon la revendication 9, **caractérisé par le fait que** le corps (60) de l'insert est prolongé de part et d'autre des ailes.

## Claims

1. Retaining member provided for fastening a spoke to a rim or to a hub of a bicycle having a hollow tubular body (23, 33, 43, 53) with an outer wall threaded along at least a portion (25, 35, 45, 55) of its height, **characterized in that** the threaded portion has at least locally an elastically deformable portion (26, 27, 38, 39, 49, 50, 63, 64) that projects with respect to the rest of the thread of the threaded portion along a radial and/or axial direction.

2. Member according to claim 1, **characterized in that** the projecting portions are portions (26, 27) of a thread borne by at least one elastically deformable strip (28, 29).

3. Member according to claim 2, **characterized in that** the strip(s) (28, 29) is cut out from the wall of the body (23) of the member,

4. Member according to claim 1, **characterized in that** the body (33) of the end piece has in its threaded portion (35) at least one slit (36, 37) located in a plane perpendicular to the axis defined by the member, and **in that** the portions of the thread (38, 39) located one side of the slit(s) (36, 37) are longitudinally offset with respect to the pitch of the rest of the thread on the other side of the slit(s).

5. Member according to claim 4, **characterized in that** it has two slits (36, 37) that are longitudinally offset and diametrically opposed.

6. Member according to claim 1, **characterized in that** the body (43) of the retaining member has in its threaded portion (45) a transverse orifice extending through it on both sides, **in that** an insert made of an elastically deformable material is housed on the inside of the orifice, both surfaces of the end (49, 50) of the insert projecting with respect to the rest of the threaded portion.

7. Member according to claim 6, **characterized in that** the insert is made of elastomer, polyamide, or acetal resin.

8. Member according to claim 1, **characterized in that** the body (53) has in its wall at the level of its threaded portion (55) at least one groove (56, 57), **in that** an insert (59) made of an elastically deformable material is engaged inside of the body (53) of the member, and **in that** the insert has at least one wing (63, 64) engaged in the groove (56, 57) and proj ecting with respect to the rest of the threaded portion.

9. Member according to claim 8, **characterized in that** the body (53) of the member has two diametrically opposed grooves, and **in that** the insert has an insert body (60) and two diametrically opposed wings (61, 62).

10. Member according to claim 9, **characterized in that** the body (60) of the insert is extended on both sides of the wings.

## Patentansprüche

1. Haltemittel, welches für die Befestigung einer Speiche an einer Felge oder einer Nabe eines Zweirades vorgesehen ist, wobei es einen hohlen, röhrenförmigen Körper (23, 33, 43, 53) mit einer äußeren, mindestens auf einem Teil (25, 35, 45, 55) seiner Höhe eine mit einem Gewinde versehene Wand aufweist, **dadurch gekennzeichnet, dass** der mit einem Gewinde versehene Teil mindestens lokal einen elastisch deformierbaren Abschnitt (26, 27, 38, 39, 49, 50, 63, 64) aufweist, in Vorsprung bezüglich dem Rest des Gewindes des mit einem Gewinde versehenen Teils gemäß einer radialen und/oder axialen Richtung.

2. Mittel gemäß Anspruch 1, **dadurch gekennzeichnet, dass** die vorstehenden Abschnitte Gewindeabschnitte (26, 27) sind, welche durch mindesteus eine elastisch deformierbare Zunge (28, 29) getragen werden.

3. Mittel gemäß Anspruch 2, **dadurch gekennzeichnet, dass** die oder die Zunge(n) (28, 29) in der Wand des Körpers (23) des Mittels ausgeschnitten sind.

4. Mittel gemäß Anspruch 1, **dadurch gekennzeichnet, dass** der Körper (33) des Ansatzes in seinem mit seinem Gewinde versehenen Teil (35) mindestens einen Spalt (36, 37) aufweist in einer Ebene rechtwinklig zu der Achse, welche durch das Mittel definiert wird und dass die Gewindeabschnitte (38, 39), welche auf einer Seite des oder der Spalte (36, 37) angeordnet sind, longitudinal bezüglich der Steigung des Restes der Gewinde der anderen Seite des oder der Spalten versetzt sind.

5. Mittel gemäß Anspruch 4, **dadurch gekennzeichnet, dass** es zwei Spalten (36, 37) aufweist, welche longitudinal und diametral gegenüberliegend versetzt sind.

6. Mittel gemäß Anspruch 1, **dadurch gekennzeichnet, dass** der Körper (43) des Haltemittels in seinem mit einem Gewinde versehenen Teil (45) eine transversale Öffnung aufweist, welche den Teil teilweise durchquert und dass ein Einsatz aus elastisch deformierbarem Material im Inneren der Öffnung aufgenommen ist, wobei die zwei Endflächen (49, 50) des Einsatzes in Vorsprung bezüglich dem Rest des mit einem Gewinde versehenen Teils sind.

7. Mittel gemäß Anspruch 6, **dadurch gekennzeichnet, dass** der Einsatz aus Elastomer, aus Polyamid oder aus einem Azetalbarz realisiert ist.

8. Mittel gemäß Anspruch 1, **dadurch gekennzeichnet, dass** der Körper (53) in seiner Wand auf Höhe des mit einem Gewinde versehenen Teils (55) mindestens einen Schnitt (56, 57) aufweist und dass ein Einsatz (59) aus elastisch deformierbarem Material im Inneren des Körpers (53) des Mittels in Eingriff ist und dass der Einsatz mindestens einen Flügel (63, 64) aufweist, der in dem Schnitt (56, 57) in Eingriff ist und bezüglich dem Rest des mit einem Gewinde versehenen Teils vorragt.

9. Mittel gemäß Anspruch 8, **dadurch gekennzeichnet, dass** der Körper (53) des Mittels zwei diametral gegenüberliegende Schnitte aufweist und dass der Einsatz einen Einsatzkörper (60) und zwei Flügel (61, 62), diametral gegenüberliegend, aufweist.

10. Mittel gemäß Anspruch 9, **dadurch gekennzeichnet, dass** der Körper (60) des Einsatzes auf beiden Seiten mit Flügeln verlängert ist.
